# EUROPEAN PATENT APPLICATION

(11) **EP 4 800 593 A1**
(43) Date of publication of application: **02.09.2026**
(21) Application number: 25160306.4
(22) Date of filing: 26.02.2025
(51) Int. Cl.: G06F 21/62, H04L 9/40, G06F 21/60

(54) **METHOD AND SYSTEM FOR MANAGING ACCESS FOR A DATA PRODUCT**

(71) Applicant: Dataspace Europe Oy, 00101 Helsinki (FI)
(72) Inventor: Hyyrönmäki, Jyrki, 44420 Liimattala (FI); Luoma-Kyyny, Juhani, 33100 Tampere (FI)
(74) Representative: Moosedog Oy

(57) **Abstract**

Disclosed is a system (100) and a method (200) for managing access for a data product (308, 406). The method comprises receiving, at a data transfer service (102, 302, 400), a registration from a first organization (304, 402); providing a first connector (122) for the first organization; receiving a request from a second organization (306, 404) to access the data product, having a second connector (142); generating a data channel (312, 412, 426) between the first connector and the second connector; determining, based on a consent parameter, whether transmission requires only a first consent from the first organization, or both the first consent and a second consent from a customer (406, 414) of the first organization; verifying whether required consent(s) are valid; and transmitting the data product from the first connector to the second connector upon verifying consent validity.

## Description

### TECHNICAL FIELD

The present disclosure relates to a method for managing access for a data product. Furthermore, the present disclosure relates to a system for managing access for a data product.

### BACKGROUND

Organizational operations produce a steady flow of data. For example, devices and machines used in operations send data to cloud services of their respective manufacturers. Also, various SaaS (Solution-as-a-service) applications save data into system of the respective service providers in addition to the data stored in organizations internally. The utilization of the organization's data stored in various locations and applications is possible only with the consent of the organization. In the networked data economy, many-to-many data delivery is essential to achieve additional business value. This causes complexity in consent management.

In order to implement consent management, the party that has the right to give consent to the use of data must be identified. This party is either the service provider itself, i.e. the organization decides on its own data, or the service provider's customer (data owner), whose data is maintained by the service provider. Information about this required consent giver needs to be inserted in machine readable form into the data product defining the data to be utilized. When the information in the service is owned by the company, the first level of consent management is the consent between the companies to transmit certain information. However, when the data in the service is owned by the service provider's customer, a two-level consent management is required - first between companies to enable the transmission of certain data, and second from the data owner to transmit and use the data for the described purpose.

Currently, an interface solution is typically implemented for transferring data outside organizations, where the commonly used solution for consent management involves data retrieval via an application programming interface (API). In these solutions the consent management is implemented with API keys. The user generates a string that is used as an identifier and authorization to retrieve data from applications. However, use of API keys has several limitations. The use of API keys presents several identified challenges in terms of security, amount of data managed, usability, and scalability of solutions. Common API security risks include data breaches, unauthorized access due to weak authentication measures and exposure of sensitive data through insecure endpoints.

In particular, the generated API keys are plaintext strings and are typically not encrypted. These keys can be used as such to penetrate the system, and no single actor can protect against a security threat that arises in the network. Additionally, keys cannot be used to control more fine-grained access to information, as all information obtained through the interface can be utilized. Data access agreements are not transmitted in any way through this mechanism. When using an API key-based solution, there is no visibility to the data sharing ecosystem, especially when the number of participants grows. The technical approach does not enable visualization of business benefits. The business value of services based on multiple data sources can be estimated only after the technical solution is implemented. When a new organization wishes to join the ecosystem, there is no view to other participating organizations. Further, API key-based solutions do not support implementation of applications that require complex many-to-many data integrations. An API key-based solution scales up typically by adding interfaces and API keys. When there is need to integrate data between multiple services or applications, the result is a complex point-to-point solution causing development and maintenance costs.

The vulnerabilities and weaknesses of API keys have limited or prevented service providers from developing applications that require data from multiple sources. Some practices have been developed to address API key security risks, including dedicated storage environments for keys, destruction of unused keys, regular key changes, and key encryption. However, there remains a significant security risk associated with the use of API keys, as companies cannot protect themselves against security threats from the network using API keys alone.

Therefore, in light of the foregoing discussion, there exists a need to overcome the aforementioned drawbacks. There is a particular need for a solution that can handle complex consent requirements while maintaining security, providing granular access control, and enabling scalable data sharing between organizations in a networked data economy ecosystem.

### SUMMARY

The aim of the present disclosure is to provide a method and a system for managing access for data products in a networked data economy ecosystem. The aim of the disclosure is achieved by a method and a system for managing access for data products using a data transfer service with secure connectors and consent-based data channels as defined in the appended independent claims to which reference is made to. Advantageous features are set out in the appended dependent claims.

Throughout the description and claims of this specification, the words "comprise", "include", "have", and "contain" and variations of these words, for example "comprising" and "comprises", mean "including but not limited to", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a block diagram illustrating architecture of a system for managing access for data products, in accordance with an embodiment of the present disclosure;
FIG. 2 is a flowchart illustrating steps of a method for managing access for data products, in accordance with an embodiment of the present disclosure;
FIG. 3 is a schematic diagram illustrating data flow in a first use case where an organization owns and controls access to its data product, in accordance with an embodiment of the present disclosure;
FIG. 4A is a schematic diagram illustrating data flow in a second use case where customer consent is required for data product access, in accordance with an embodiment of the present disclosure;
FIG. 4B is a schematic diagram illustrating creation of a service product using data products and associated consent management as per the second use case, in accordance with an embodiment of the present disclosure; and
FIG. 4C is a schematic diagram illustrating verification and transmission of data products through connectors based on consent validation as per the second use case, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for managing access for a data product, the method comprising:
receiving, at a data transfer service, a registration from a first organization, wherein the registration comprises a description of at least one data product provided by the first organization, and a consent parameter indicating whether the first organization or a customer of the first organization has authority to grant access to the data product;
providing, by the data transfer service, a first connector for the first organization;
receiving, at the data transfer service, a request from a second organization to access the data product, wherein the second organization has a second connector associated therewith;
generating, in response to the received request, a data channel having a unique identifier between the first connector and the second connector;
determining, based on the consent parameter, whether transmission of the data product requires only a first consent from the first organization, or both the first consent and a second consent from the customer of the first organization;
verifying, by querying the data transfer service using the unique identifier, whether required consent(s) indicated by the consent parameter are valid; and
transmitting, upon verifying validity of the required consent(s), the data product from the first connector to the second connector.

The present method enables secure and controlled sharing of data products between organizations while ensuring proper consent management. The method implements a two-layer architecture comprising an ecosystem layer for organization registration and consent management, and a data transmission layer for secure data exchange between connectors. This architecture provides significant advantages over conventional API key-based approaches by eliminating security vulnerabilities associated with plaintext API keys, enabling granular access control through consent parameters, and supporting scalable data sharing through a one-to-many architecture.

In a second aspect, the present disclosure provides a system for managing access for a data product, the system comprising:
a data transfer service; and
at least one processor configured to:
   receive a registration from the first organization, wherein the registration comprises a description of at least one data product provided by the first organization, and a consent parameter indicating whether the first organization or a customer of the first organization has authority to grant access to the data product;
   provide, via the data transfer service, a first connector for the first organization;
   receive a request from the second organization to access the data product, wherein the second organization has a second connector associated therewith;
   generate, in response to the received request, a data channel having a unique identifier between the first connector and the second connector;
   determine, based on the consent parameter, whether transmission of the data product requires only a first consent from the first organization, or both the first consent and a second consent from the customer of the first organization;
   verify, by querying the data transfer service using the unique identifier, whether required consent(s) indicated by the consent parameter are valid; and
   control transmission of the data product from the first connector to the second connector upon verifying validity of the required consent(s).

The system provides a platform for implementing secure data sharing with proper consent management through its multi-layered architecture. In the system, the data transfer service maintains separation between the ecosystem layer handling organization registration and consent management, and the data transmission layer manages secure data exchange through connectors. This architectural approach provides security, scalability, and granular access control while eliminating the need for traditional API keys.

In the context of the present disclosure, the term "data product" refers to a defined set of data offered by an organization for potential sharing with other organizations. The data product comprises information generated, collected, or processed by the organization's applications, devices, or services. A data product includes not only the raw data itself but also associated metadata describing the nature, structure, and intended use of the data. For example, a data product may comprise sensor measurements, transaction records, analytical results, or any other form of digital information that provides value in a networked data economy.

Further, term "consent parameter" as used herein refers to a configurable indicator that specifies the authorization requirements for accessing a data product. The consent parameter defines whether access control decisions can be made solely by the organization offering the data product, or whether additional authorization from the organization's customer is required. The consent parameter enables implementation of multi-level consent management aligned with data ownership and privacy requirements. The consent parameter may be stored as a machine-readable value associated with metadata of the data product.

As discussed, the method includes receiving, at the data transfer service, the registration from the first organization, wherein the registration comprises a description of at least one data product provided by the first organization, and the consent parameter indicating whether the first organization or the customer of the first organization has authority to grant access to the data product. Herein, the term "first organization" refers to an entity that provides data products through the data transfer service for potential sharing with other organizations. The first organization may be, for example, a service provider that collects or generates data through its operations, such as a manufacturer collecting sensor data from machines, or a software service provider maintaining customer data.

This registration process establishes presence of the organization in the data sharing ecosystem and declares its available data products. The description of the data product provides information about what data is being offered, enabling potential consumers to evaluate its utility for their needs. The registration process includes validation of the organization's identity and authority to share the specified data products. The consent parameter configured during registration establishes the governance model for each data product, ensuring proper authorization workflows are followed. When customer consent is required, this is clearly indicated through the consent parameter, triggering additional verification steps before data access is granted.

When the first organization registers with the data transfer service, it provides detailed information about its available data products, including the type of data, format, update frequency, and intended uses. The consent parameter configured during registration establishes whether the first organization has full authority over its data products or whether customer consent is required. For instance, when the first organization is a software service provider, data products containing customer information would typically require customer consent, while data products about the service provider's own operations may not require additional consent.

In the present implementation, the first organization adds terms of use to each data product during the registration process. The terms of use specify permitted usage scenarios, restrictions on data processing, and any limitations on redistribution of the data product. The data transfer service validates that terms of use are specified before allowing data products to be shared. The data transfer service maintains records of terms of use acceptance by organizations requesting access to data products. The data transfer service implements mechanisms for updating terms of use and obtaining new acceptance from organizations using the data products.

In general, the registration process includes creation and description of data products by the first organization. The data transfer service validates the data product descriptions to ensure completeness and consistency of the specified parameters. The data transfer service maintains version control for data product descriptions when parameters are updated. In present configuration, the data transfer service also enables the first organization to modify data product parameters while maintaining active data sharing relationships.

In present embodiments, the method includes registering, at the data transfer service, a plurality of organizations;
maintaining a view of data sharing relationships between the registered organizations; and
enabling each registered organization to monitor their respective data products and associated consents through the view.

Herein, the data transfer service registers the plurality of organizations including the first organization, maintains the view of data sharing relationships between the registered organizations, and enables each registered organization to monitor their respective data products and associated consents through the view. This registration process creates a complete view that helps organizations understand and manage their data sharing relationships. Such view shows which organizations are sharing what data products with whom, the status of various consents, and the overall flow of data through the ecosystem. Organizations can use this view to monitor active data channels, verify consent status, and identify potential new data sharing opportunities. The ecosystem view significantly improves transparency and control compared to traditional point-to-point integration approaches where organizations lack visibility into their overall data sharing landscape.

The method further includes providing, by the data transfer service, the first connector for the first organization. Throughout the present disclosure, the term "connector" refers to a software component that enables secure data exchange between an organization's environment and the data transfer service. The connector implements encryption, authentication, and communication protocols required for safe data transmission. The connector is designed to operate independently from the organization's internal applications, implementing a loose coupling architecture that enhances security and flexibility. When the data transfer service provides a connector, it generates a unique instance configured specifically for the receiving organization's environment and security requirements. The connector includes modules for encrypting outgoing data and managing communications with internal applications through standardized commands.

Herein, the term "first connector" refers to a dedicated software component provided to the first organization that enables secure data exchange between the first organization's environment and the data transfer service. When the first connector is provided, it is specifically configured for the first organization's environment, including security parameters, communication settings, and encryption keys unique to that organization. The first connector serves as the first organization's secure gateway for sharing its data products with other organizations in the ecosystem.

Optionally, the first connector is installed in a computing environment of the first organization, and wherein the first connector operates independently of applications that are data sources or targets within the computing environment. This independent operation implements a security boundary between internal systems of the first organization and external data sharing activities. This architecture allows the first organization to modify or upgrade its internal applications without impacting its data sharing capabilities through the first connector. Such configuration between the first connector and internal applications also simplifies integration and reduces maintenance overhead for the first organization.

The method further includes receiving, at the data transfer service, the request from the second organization to access the data product, wherein the second organization has the second connector associated therewith.

Herein, the term "second organization" refers to an entity that requests access to data products made available through the data transfer service by other organizations. The second organization may be, for example, a service provider seeking to enhance its offerings using data from other organizations, a manufacturer requiring operational data from its suppliers, or an analytics provider looking to create value-added services. The access request initiates the consent verification and data sharing workflow between organizations. The request identifies both the specific data product being requested and the requesting organization through its associated connector. When receiving the request, the data transfer service validates the identity of the requesting organization and its authorization to participate in data sharing. The service also verifies that the requested data product exists and is available for sharing. The presence of a properly configured connector for the requesting organization ensures secure data transmission can be established if access is granted.

In particular, when the second organization submits an access request, it needs to specify which data product it seeks to access and the intended use of that data. The request process includes validation of the second organization's identity and its eligibility to participate in data sharing within the ecosystem. The second organization may also need to demonstrate business purposes for accessing the requested data product and commit to using the data in accordance with specified terms and conditions. The presence of the second connector associated with the second organization ensures that proper security measures are in place for receiving and processing the requested data.

Optionally, the first connector and the second connector communicate with applications of their respective organizations using GET and POST commands without application programming interfaces (APIs). That is, the first connector and the second connector communicate with internal applications using simple GET and POST commands rather than complex API integrations, eliminating the security risks associated with API keys. This simplified communication approach provides several technical advantages for the first organization and the second organization. The GET and POST commands enable standardized data exchange without exposing internal system details or requiring complex API maintenance. The elimination of APIs significantly reduces security vulnerabilities by removing the need for API keys or other permanent access credentials. This communication technique allows the first organization and the second organization to integrate the data products with its internal applications while maintaining strict security boundaries. The simplified interface also makes it easier for the first organization and the second organization to modify its internal systems without disrupting data reception through the first connector and the second connector, respectively. The standardized commands ensure consistent data handling regardless of the internal architecture of the applications of the corresponding organization.

The method further includes generating, in response to the received request, the data channel having the unique identifier between the first connector and the second connector. Throughout the present disclosure, the term "data channel" refers to a secure communication pathway established between two connectors for transferring specific data products. The data channel provides a dedicated pathway for secure data exchange while maintaining separation between different data sharing relationships. The data channel establishment process includes configuration of encryption parameters, communication protocols, and access controls specific to the planned data exchange. The unique identifier assigned to each data channel enables tracking and management of individual data sharing relationships. The unique identifier of the data channel is used in subsequent operations to verify consent status and control data transmission. The unique identifier enables separation of data flows when multiple channels are active for the same data product.

Herein, the data transfer service implements identifier-based routing of data products through appropriate channels. The generation of the data channel involves configuration of security parameters, including encryption keys, communication protocols, and access control rules. The data channel generation includes verification that both connectors are properly configured and capable of secure communication. The data channel maintains strict isolation between different data sharing relationships, ensuring that data products are only accessible to authorized parties through their designated channels. Further, herein, the unique identifier assigned to each data channel serves multiple purposes in operation. For instance, the unique identifier enables tracking of individual data sharing relationships and their associated consent status. The unique identifier is also used as a reference point for all operations related to that specific data sharing arrangement, including consent verification, access control, and audit logging. The data transfer service uses the unique identifier to associate consent information, encryption parameters, and usage terms with specific data channels. The data transfer service may also maintain logs of all channel operations indexed by the unique identifier for audit purposes.

Optionally, the data transfer service implements a one-to-many architecture enabling:
creation of multiple data channels for the data product with different organizations; and
transmission of same data through all data channels having valid consent(s).

The one-to-many architecture allows a single data product to be efficiently distributed to multiple authorized organizations without requiring separate integration points for each relationship. Each data channel maintains its own consent validation and security parameters while sharing the same underlying data distribution infrastructure. This proposed architecture provides scalability and efficiency advantages for organizations sharing data products. The proposed architecture also enables dynamic addition or removal of data channels without impacting existing data sharing relationships. The proposed architecture can also efficiently manage hundreds or thousands of data channels while maintaining consistent security and consent enforcement across all channels. This approach significantly reduces infrastructure complexity and maintenance overhead compared to traditional point-to-point integration approaches.

The method further includes determining, based on the consent parameter, whether transmission of the data product requires only a first consent from the first organization, or both the first consent and a second consent from the customer of the first organization. Herein, the term "first consent" refers to the authorization granted by the first organization for sharing its data products, while "second consent" refers to the additional authorization required from the first organization's customer when the data product contains customer-owned information. The determination process involves evaluation of the consent parameter associated with the data product to establish the required authorization levels. This evaluation is based on the nature of the data product, its ownership status, and applicable privacy requirements. The present method involves maintaining clear separation between organizational consent and customer consent to ensure proper governance of different types of data. The consent determination process is important for implementing appropriate access control workflows and ensuring compliance with data privacy regulations. When customer consent is required, the present method involves implementing additional verification steps before allowing data transmission.

Optionally, the consent information comprises an indication of the first consent when granted by the first organization, and when required by the consent parameter, an indication of the second consent when granted by the customer. The consent information is stored in a structured format that indicates the status of each required consent level. The storage implementation enables efficient querying of consent status while maintaining the integrity of consent records. The present method involves maintaining timestamps and audit trails for all consent-related activities to ensure accountability and compliance. The consent information includes details about the scope and conditions of each granted consent, ensuring proper enforcement of data usage restrictions. This structured approach to consent management enables automated enforcement of access controls while maintaining transparency and auditability of consent decisions.

The method further includes verifying, by querying the data transfer service using the unique identifier, whether required consent(s) indicated by the consent parameter are valid. Herein, the term "verifying" in context of consent validation refers to a real-time process of checking the current status and validity of all required consents before allowing data transmission. This verification process involves querying stored consent information using the unique identifier associated with the data channel to determine whether all necessary authorizations are in place and remain valid. The verification step ensures continuous compliance with consent requirements by checking consent status for each transmission attempt, rather than relying on a one-time validation. When multiple consent levels are required, the verification process checks both organizational and customer consent status independently. The verification process includes checking not only the presence of consent but also any temporal or scope limitations associated with the granted consents.

In particular, the verification process implemented by the data transfer service includes specific checks based on the consent parameter of the data product. When the consent parameter indicates that only the first consent from the first organization is required, the verification process confirms the presence and validity of the organizational consent. When the consent parameter indicates that both the first consent and the second consent are required, the verification process performs sequential validation of both consent levels. The verification process includes checking temporal aspects of consent validity, such as consent expiration dates or usage limits. The verification process generates a verification result that determines whether data transmission can proceed.

Optionally, the consent information is stored in a backend system of the data transfer service, and wherein verifying whether the required consent(s) are valid comprises querying the stored consent information for each transmission request. The backend system maintains a centralized repository of consent information that serves as the authoritative source for consent validation. The consent information is stored in a structured format that enables efficient querying while maintaining the integrity and auditability of consent records. The backend system maintains detailed metadata about each consent, including grant time, scope, conditions, and expiration criteria. For each transmission request, the present method involves performing a validation check against this stored consent information to ensure all required authorizations remain valid. This centralized approach ensures consistent application of consent rules across all data transmissions while maintaining a complete audit trail of consent-related activities.

The method further includes transmitting, upon verifying validity of the required consent(s), the data product from the first connector to the second connector. Herein, the term "transmitting" refers to the secure transfer of data products between connectors after all required validations and authorizations have been confirmed. The transmission process involves multiple security measures to ensure data confidentiality and integrity during transfer. The data transmission occurs only after successful verification of all required consents, ensuring continuous compliance with data sharing agreements and privacy requirements. The data transmission includes preparation of the data product, application of security measures, and controlled delivery through the established data channel. The actual data transfer is executed using secure protocols that protect the data product during its transmission from the first connector to the second connector.

In particular, the transmitting process implemented by the first connector includes verifying the integrity of the data product before transmission begins. The first connector confirms the operational status of the second connector before initiating data transfer. The first connector may also implement error handling procedures to manage transmission interruptions or failures. The first connector may further generate transmission logs that document the details of each data product transfer through the data channel.

In some embodiments, the method includes:
encrypting, at the first connector, the data product using a dynamic encryption key;
encrypting the dynamic encryption key using a public key of the second organization; and
transmitting the encrypted data product and the encrypted dynamic encryption key to the second connector,
wherein the second organization can decrypt the dynamic encryption key using a private key thereof, and subsequently decrypt the data product using the decrypted dynamic encryption key.

This multi-layer encryption scheme provides enhanced security for data transmission by implementing both symmetric and asymmetric encryption. The dynamic encryption key changes for each transmission, ensuring that even if one transmission is compromised, other transmissions remain secure. The use of public-key infrastructure for key encryption ensures that only the intended recipient can access the data product. The encryption process is handled automatically by the connectors, simplifying the implementation of secure data sharing for the organizations involved.

Specifically, the encryption process implemented by the first connector ensures that each data transmission uses unique encryption parameters. The first connector validates the public key of the second organization before using the public key for encryption. The first connector implements key management procedures to ensure secure handling of encryption keys. The first connector also applies encryption at multiple levels to protect both the data product and the dynamic encryption key. The first connector further verifies the completion of encryption operations before initiating transmission.

Optionally, when the second organization creates a service product using the data product, the method comprises:
receiving the data access agreement from the second organization for the service product;
presenting the data access agreement to the customer of the first organization; and
activating data channel(s) associated with the service product upon acceptance of the data access agreement by the customer.

Herein, the data transfer service receives a description of the service product from the second organization, including specifications of how the data product will be used. The data transfer service verifies that the proposed service product complies with usage terms specified for the data product. The data transfer service manages the process of obtaining customer acceptance for the service product usage. The data transfer service also coordinates the activation of multiple data channels when the service product requires data from multiple sources. The data transfer service may further maintain records of all service products and associated data access agreements.

Optionally, the data product is associated with a data access agreement, and wherein creating the data channel comprises receiving, from the second organization, an acceptance of terms specified in the data access agreement. As used herein, the "data access agreement" refers to a document that specifies the terms and conditions under which data products may be accessed and used. The data access agreement forms a part of the data channel creation process, ensuring that technical data access is aligned with legal and contractual obligations. The data access agreement specifies various aspects of data usage including permitted purposes, confidentiality requirements, and any restrictions on data processing or redistribution. When the second organization accepts the terms of the data access agreement, this acceptance is recorded as part of the consent information associated with the data channel.

In present implementations, the method for managing access for data products involves sequential execution of registration, channel creation, consent management, and data transmission processes. The data transfer service first receives registrations from multiple organizations seeking to share data products. Each organization providing data products submits descriptions and consent parameters for the data products through a registration interface of the data transfer service. The data transfer service generates and provides connectors to registered organizations, configuring each connector according to the specific requirements of the organization environment. The connectors establish secure communication pathways with organization applications using GET and POST commands, enabling data exchange without API dependencies. The data transfer service maintains a complete view of registered organizations and data products, enabling efficient management of data sharing relationships.

Herein, the data transfer service implements a logical structure for managing data product access and transmission. The ecosystem layer of the data transfer service handles organization registration, data product descriptions, and consent management functions. The ecosystem layer maintains separation from the data transmission operations, enabling independent scaling and security control of registration and transmission functions. The ecosystem layer also implements dedicated storage and processing mechanisms for managing organization relationships and consent workflows. The ecosystem layer further provides organizations with centralized access to manage data sharing relationships and monitor consent status. Furthermore, the ecosystem layer maintains complete records of all registered organizations and available data products.

The data transfer service processes access requests for data products by implementing multi-step validation and channel creation procedures. When the second organization requests access to a data product, the data transfer service verifies registration status and connector configuration for both organizations involved. The data transfer service also generates a data channel with a unique identifier between the first connector and the second connector after validating the request. The consent verification process examines the consent parameter of the requested data product to determine authorization requirements. The data transfer service further implements consent validation workflows based on whether only organizational consent or both organizational and customer consent are required. The data transfer service further maintains consent status information in a backend system, enabling real-time verification during data transmission operations.

The implementation of the present method involves security measures for protecting data products during transmission between organizations. The first connector implements encryption of data products using dynamic encryption keys that change for each transmission operation. The encryption process includes securing the dynamic encryption keys using public key infrastructure, ensuring only authorized recipients can access transmitted data products. The data transfer service enables creation of multiple data channels for the same data product through a one-to-many architecture, supporting efficient data distribution to multiple authorized organizations. The method implementation includes mechanisms for managing data access agreements, tracking acceptance of terms, and ensuring compliance throughout the data sharing process. The data transfer service maintains complete audit records of all operations, including registration activities, consent grants, channel creation, and data transmission events.

The present disclosure also relates to the system as described above. Various embodiments and variants disclosed above, with respect to the aforementioned method, apply *mutatis mutandis* to the system of the present disclosure.

The system for managing access for data products provides a hardware-implemented infrastructure for secure data sharing between organizations. The data transfer service is implemented using a distributed server architecture comprising multiple processing nodes, data storage units, and network interfaces that collectively manage data product access. The at least one processor includes dedicated processing circuits for handling registration requests, consent verification, and data transmission operations. The processor implements parallel processing capabilities to manage multiple simultaneous data channels and consent verification operations. The data transfer service includes storage systems for maintaining consent information and registration data. The system may also include dedicated memory units for temporary storage of data products during transmission operations (i.e the temporary storage refers to the working memories allocated during the process - one of the key principles is that data is not stored but only transmitted). The system implements dedicated network interfaces for secure communication with connectors installed in organization environments. The processor includes hardware encryption modules for processing security operations related to data transmission. The processor may implement hardware-level isolation between different data channels to ensure secure multi-tenant operations.

In present embodiments, the system comprises:
a computing environment of the first organization wherein the first connector is installed;
wherein the first connector comprises processing circuitry configured to operate independently of applications that are data sources or targets within the computing environment.

The computing environment may include dedicated hardware resources allocated for operation of the first connector. The computing environment implements isolation mechanisms that separate the first connector from other applications running in the environment. The processing circuitry of the first connector executes connector operations without requiring direct interaction with application processes. Herein, the computing environment provides dedicated memory space for the first connector to process data products independently of application memory allocation. Further, the processing circuitry of the first connector implements dedicated processing paths for handling data transmission operations.

The processing circuitry maintains separate processing threads for handling communication with internal applications and external data channels. The processing circuitry also implements memory management functions that ensure secure handling of data products during processing. The processing circuitry may also include monitoring functions that track operational status of the first connector.

Optionally, the first connector comprises an encryption module configured to:
encrypt the data product using a dynamic encryption key, and
encrypt the dynamic encryption key using a public key of the second organization; and
the second connector comprises a decryption module configured to:
decrypt the dynamic encryption key using a private key thereof, and
decrypt the data product using the decrypted dynamic encryption key.

The encryption module may include dedicated processing circuits for executing encryption operations. In an example, the encryption module implements hardware-based random number generation for creating dynamic encryption keys. Herein, the encryption module maintains secure storage for encryption keys and parameters. The encryption module includes dedicated memory buffers for processing data products during encryption operations. The encryption module may implement hardware-level security for protecting encryption keys. Further, the decryption module of the second connector implements corresponding hardware-based decryption capabilities. The decryption module includes secure storage for private keys used in decryption operations. The decryption module implements dedicated processing paths for handling encrypted data products and keys. The decryption module also maintains separate memory spaces for processing decrypted data products. The decryption module may also include hardware-based verification of decryption operations.

Optionally, in the system, the first connector and the second connector comprise communication interfaces configured to communicate with applications of their respective organizations using GET and POST commands without application programming interfaces (APIs). The communication interfaces implement hardware-level protocol handling for GET and POST commands. The communication interfaces include dedicated buffer memory for processing command data. The communication interfaces implement hardware-based validation of command formats and content. The communication interfaces maintain separate processing paths for internal and external communications. The communication interfaces include monitoring circuits for tracking command operations. The communication interfaces may include hardware-based security controls for validating command sources. The communication interfaces may also implement dedicated memory management for handling command data. In present configuration, the communication interfaces may also maintain hardware-level separation between different communication channels.

Optionally, the system comprises:
a backend system configured to store consent information; and
a verification module configured to query the stored consent information for each transmission request to verify whether the required consent(s) are valid.

For this purpose, the backend system includes dedicated storage hardware for maintaining consent records. The backend system may implement redundant storage mechanisms to ensure high availability of consent information. The backend system may also implement hardware-based indexing for efficient consent record retrieval. The backend system maintains separate storage partitions for different types of consent information. Further, the verification module includes dedicated processing circuits for consent validation operations. The verification module implements parallel processing capabilities for handling multiple simultaneous verification requests. The verification module maintains dedicated memory buffers for processing consent queries.

The method and the system of the present disclosure provide a solution to challenges in implementing secure data sharing between organizations while managing complex consent requirements. The method and the system enable controlled access to data products through a data transfer service that maintains separation between consent management and data transmission operations. The method and the system provide consent parameter-based access control that accommodates both organization-owned and customer-owned data scenarios. The method and the system also provide secure data transmission through connectors that operate independently of organization applications. The method and the system further enable scalable data sharing through a one-to-many architecture that maintains security and consent verification for each data channel.

The method and the system of the present disclosure implement multiple technical features that address data sharing requirements in networked data economies. The method and the system eliminate requirements for permanent access credentials while enabling granular control over data product access. The data transfer service maintains a complete view of data sharing relationships that enables organizations to monitor and control data flows through the ecosystem. The connectors implement loose coupling with applications that enables flexible integration without exposing internal system details. The one-to-many architecture reduces infrastructure requirements by enabling efficient distribution of data products to multiple authorized organizations through separate data channels. The method and the system enable creation of value-added services while maintaining proper consent chains through multiple levels of data usage.

### DETAILED DESCRIPTION OF THE DRAWINGS

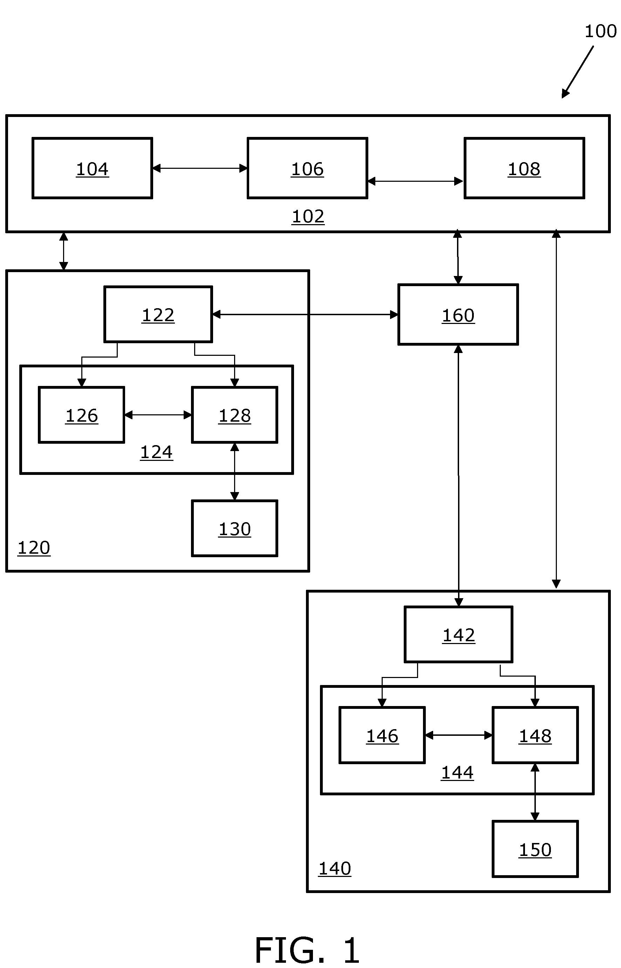

Referring to FIG. 1, illustrated is a block diagram of a system 100 for managing access for a data product, in accordance with an embodiment of the present disclosure. The system 100 comprises a data transfer service 102, a first organization environment 120, and a second organization environment 140. The data transfer service 102 includes a processor 104, a backend system 106, and a verification module 108. The backend system 106 comprises a consent information storage 110 configured to store consent parameters and validation status. The verification module 108 includes a consent validation unit 112 configured to verify consent status for data transmission requests.

The first organization environment 120 includes a first connector 122 associated with first connector modules 124. The first connector modules 124 include an encryption module 126 and a communication interface 128. The encryption module 126 comprises a dynamic key generator for generating encryption keys and a public key encryption unit for securing the dynamic keys. The communication interface 128 implements GET/POST commands for exchanging data with applications 130 that serve as data sources or targets within the first organization environment 120. The first connector 122 maintains independence from the applications 130 through standardized command interfaces.

The second organization environment 140 includes a second connector 142 comprising second connector modules 144. The second connector modules 144 include a decryption module 146 and a communication interface 148. The decryption module comprises a private key storage for storing decryption keys and a dynamic key processing unit for handling encrypted transmission keys. The communication interface 148 implements GET/POST commands for exchanging data with applications 150 within the second organization environment 140.

The data transfer service 102 establishes data channels 160 with unique identifiers between the first connector 122 and the second connector 142, enabling secure data product transmission while ensuring proper consent validation through the verification module 108.

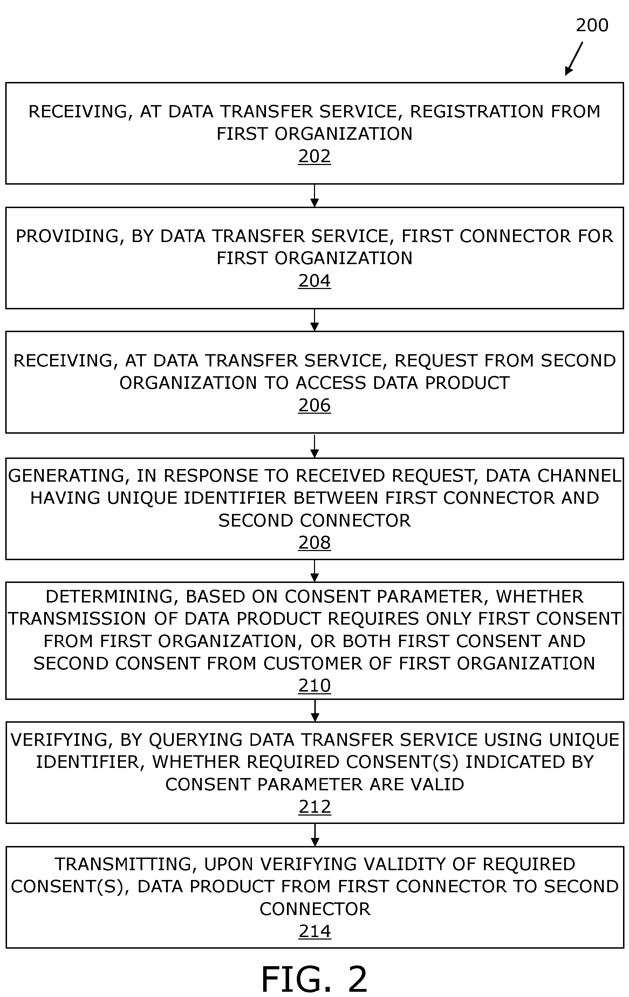

Referring to FIG. 2, illustrated is a flowchart of a method 200 for managing access for a data product, in accordance with an embodiment of the present disclosure. At step 202, the data transfer service 102 receives a registration from a first organization, wherein the registration comprises a description of at least one data product provided by the first organization, and a consent parameter indicating whether the first organization or a customer of the first organization has authority to grant access to the data product. At step 204, the data transfer service 102 provides a first connector 122 for the first organization. At step 206, the data transfer service 102 receives a request from a second organization to access the data product, wherein the second organization has a second connector 142 associated therewith. At step 208, the data transfer service 102 generates, in response to the received request, a data channel 160 having a unique identifier between the first connector 122 and the second connector 142.

At step 210, the verification module 108 determines, based on the consent parameter stored in the consent information storage 110, whether transmission of the data product requires only a first consent from the first organization, or both the first consent and a second consent from the customer of the first organization. At step 212, the verification module 108 verifies, by querying the data transfer service 102 using the unique identifier, whether required consent(s) indicated by the consent parameter are valid. At step 214, upon verifying validity of the required consent(s), the data product is transmitted from the first connector 122 to the second connector 142 through the data channel 160.

The aforementioned steps 202-214 are only illustrative, and other alternatives can also be provided where one or more steps are added, one or more steps are removed, or one or more steps are provided in a different sequence without departing from the scope of the claims herein.

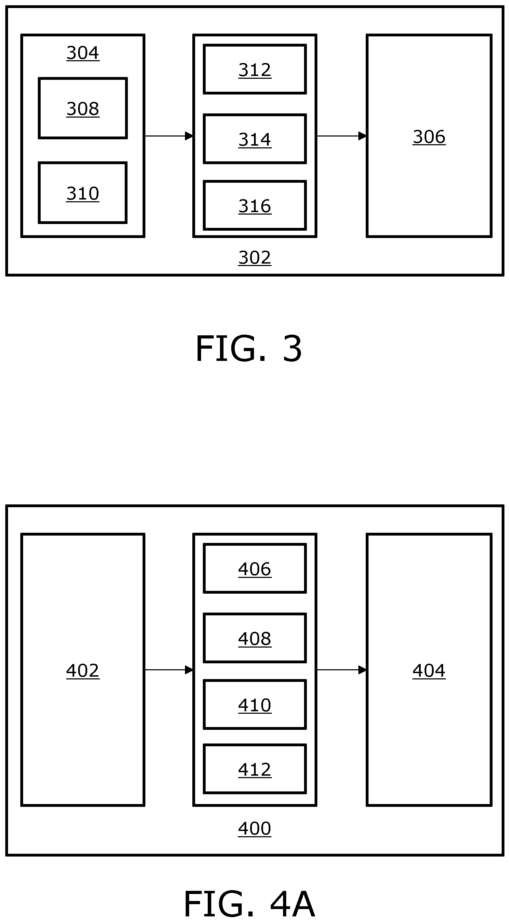

Referring to FIG. 3, illustrated is a schematic diagram showing a first use case of the system 100 where a first organization has authority to grant access to a data product, in accordance with an embodiment of the present disclosure. Herein, a data transfer service 302 implements an ecosystem interface between a first organization 304 and a second organization 306. The first organization 304 creates and registers a data product 308 comprising data (e.g., measurement data from humidity sensors), wherein the first organization 304 configures the data product 308 to indicate the first organization 304 as the owner with authority to grant access. The first organization 304 also defines terms of use 310 for the data product 308, which are presented through the data transfer service 302.

The data transfer service 302 receives an access request 312 from the second organization 306 to access the data product 308. The second organization 306 accepts the terms of use 310 through the ecosystem interface of the data transfer service 302. The data transfer service 302 stores a consent status 314 in the backend system 106 upon acceptance of the access request 316 by the first organization 304. The data transfer service 302 establishes a data channel 316 with a unique identifier between the connectors (such as, the first connector 122 and the second connector 142) based on the stored consent status 314. The data transfer service 302 further enables transmission of data through the data channel 316 since the first organization 304 has authority to grant access to the data product 308.

The data transfer service 302 manages data transmission from the first organization 304 functioning as a supplier to the second organization 306 functioning as a subscriber. The second organization 306 processes received data in accordance with the accepted terms of use 310. The data transfer service 302 implements this data sharing workflow in industrial scenarios, such as when the first organization 304 sends delivery information about parts of a chiller package to the second organization 306 in an assembly industry implementation. The data transfer service 302 maintains the data channel 316 for ongoing secure transmission of the data product 308 while ensuring compliance with the terms of use 310.

Referring to FIGs. 4A-4C, illustrated are schematic diagrams showing a second use case of the system 100 where customer consent is required for data product access, in accordance with an embodiment of the present disclosure. Herein, a data transfer service 400 implements interactions between a first organization 402, a second organization 404, and a customer 406 of the first organization 402.

FIG. 4A illustrates a schematic diagram showing an initial state of the second use case of the system 100 where customer consent is required for data product access, in accordance with an embodiment of the present disclosure. The data transfer service 400 implements an ecosystem interface between the first organization 402 and the second organization 404. The interface displays data products 406 registered by the first organization 402, wherein the data products 406 (such as, measurement data from sensors) include a consent parameter indicating requirement of customer consent. The interface further displays an access request 408 submitted by the second organization 404 through the second connector 142, and terms of use 410 associated with the data products 406. The data transfer service 400 maintains a data channel 412 in an inactive state pending required customer consent.

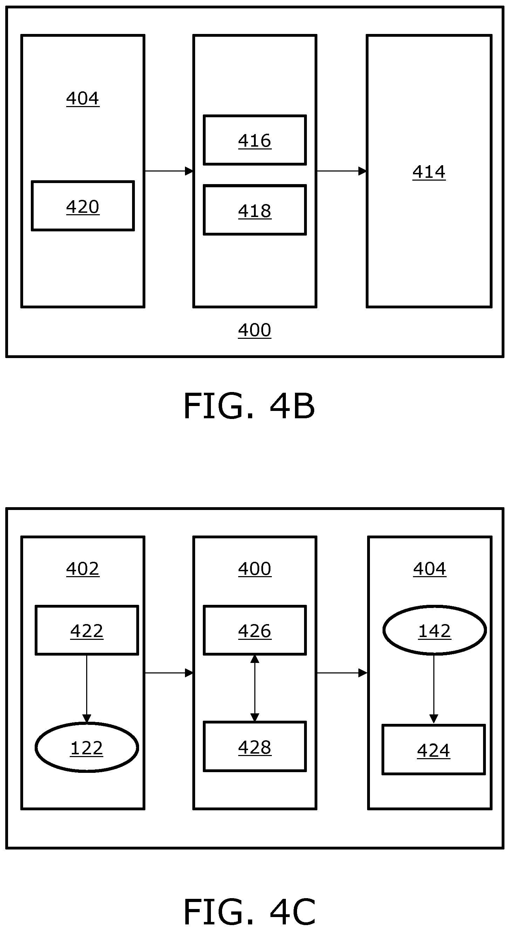

FIG. 4B illustrates a schematic diagram showing a service product creation phase of the second use case of the system 100, in accordance with an embodiment of the present disclosure. Herein, the data transfer service 400 displays interaction between the second organization 404 and the customer 414 of the first organization 402. The second organization 404 creates a service product 416 in the ecosystem marketplace of the data transfer service 400, specifying required data products 420 needed to provide the service. The data transfer service 400 presents a data access agreement 418 from the second organization 404 to the customer 414, wherein the data access agreement 418 specifies terms for using the required data products 420 within the service product 416. The data transfer service 400 manages the process of obtaining acceptance of the data access agreement 418 from the customer 414 before enabling data transmission.

FIG. 4C illustrates a schematic diagram showing a data transmission phase of the second use case of the system 100, in accordance with an embodiment of the present disclosure. The data transfer service 400 manages data transmission between an application 422 in the first organization 402 and an application 424 in the second organization 404 through an active data channel 426. The first connector 122 and the second connector 142 implement secure data exchange between the applications 422, 424 through the active data channel 426. The data transfer service 400 performs consent verification 428 (through the verification module 108) for each data transmission request, confirming validity of customer consent before allowing data flow through the active data channel 426. The first connector 122 and the second connector 142 maintain secure communication with their respective applications 422, 424 using GET and POST commands, while implementing encryption and decryption operations for data transmission through the active data channel 426.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method (200) for managing access for a data product (308, 406), the method comprising:
receiving, at a data transfer service (102, 302, 400), a registration from a first organization (304, 402), wherein the registration comprises a description of at least one data product (308, 406) provided by the first organization (304, 402), and a consent parameter indicating whether the first organization (304, 402) or a customer (406, 414) of the first organization has authority to grant access to the data product;
providing, by the data transfer service (102, 302, 400), a first connector (122) for the first organization (304, 402);
receiving, at the data transfer service (102, 302, 400), a request from a second organization (306, 404) to access the data product (308, 406), wherein the second organization has a second connector (142) associated therewith;
generating, in response to the received request, a data channel (312, 412, 426) having a unique identifier between the first connector (122) and the second connector (142);
determining, based on the consent parameter, whether transmission of the data product (308, 406) requires only a first consent from the first organization (304, 402), or both the first consent and a second consent from the customer (406, 414) of the first organization;
verifying, by querying the data transfer service (102, 302, 400) using the unique identifier, whether required consent(s) indicated by the consent parameter are valid; and
transmitting, upon verifying validity of the required consent(s), the data product (308, 406) from the first connector (122) to the second connector (142).

2. The method (200) of claim 1, wherein the first connector (122) is installed in a computing environment (120) of the first organization (304, 402), and wherein the first connector (122) operates independently of applications (130, 422) that are data sources or targets within the computing environment (120).

3. The method (200) of any of claims 1 or 2, further comprising:
encrypting, at the first connector (122), the data product (308, 406) using a dynamic encryption key;
encrypting the dynamic encryption key using a public key of the second organization (306, 404); and
transmitting the encrypted data product and the encrypted dynamic encryption key to the second connector (142),
wherein the second organization (306, 404) can decrypt the dynamic encryption key using a private key thereof, and subsequently decrypt the data product (308, 406) using the decrypted dynamic encryption key.

4. The method (200) of any of preceding claims, wherein the consent information comprises an indication of the first consent when granted by the first organization (304, 402), and when required by the consent parameter, an indication of the second consent when granted by the customer (406, 414).

5. The method (200) of any of preceding claims, wherein the consent information is stored in a backend system (106) of the data transfer service (102, 302, 400), and wherein verifying whether the required consent(s) are valid comprises querying the stored consent information for each transmission request.

6. The method (200) of any of preceding claims, wherein the data product (308, 406) is associated with a data access agreement (418), and wherein creating the data channel (312, 412, 426) comprises receiving, from the second organization (306, 404), an acceptance of terms specified in the data access agreement (418).

7. The method (200) of claim 6, wherein when the second organization (306, 404) creates a service product (416) using the data product (308, 406), the method comprises:
receiving the data access agreement (418) from the second organization (306, 404) for the service product (416);
presenting the data access agreement (418) to the customer (406, 414) of the first organization (304, 402); and
activating data channel(s) (312, 412, 426) associated with the service product (416) upon acceptance of the data access agreement (418) by the customer (406, 414).

8. The method (200) of any of preceding claims, wherein the data transfer service (102, 302, 400) implements a one-to-many architecture enabling:
creation of multiple data channels (312, 412, 426) for the data product (308, 406) with different organizations; and
transmission of same data through all data channels (312, 412, 426) having valid consent(s).

9. The method (200) of any of preceding claims, wherein the first connector (122) and the second connector (142) communicate with applications (130, 150, 422, 424) of their respective organizations using GET and POST commands without application programming interfaces (APIs).

10. The method (200) of any of preceding claims, further comprising:
registering, at the data transfer service (102, 302, 400), a plurality of organizations;
maintaining a view of data sharing relationships between the registered organizations; and
enabling each registered organization to monitor their respective data products (308, 406) and associated consents through the view.

11. A system (100) for managing access for a data product (308, 406), the system comprising:
a data transfer service (102, 302, 400); and
at least one processor (104) configured to:
receive a registration from the first organization (304, 402), wherein the registration comprises a description of at least one data product (308, 406) provided by the first organization (304, 402), and a consent parameter indicating whether the first organization (304, 402) or a customer (406, 414) of the first organization has authority to grant access to the data product;
provide, via the data transfer service (102, 302, 400), a first connector (122) for the first organization (304, 402);
receive a request from the second organization (306, 404) to access the data product (308, 406), wherein the second organization has a second connector (142) associated therewith;
generate, in response to the received request, a data channel (312, 412, 426) having a unique identifier between the first connector (122) and the second connector (142);
determine, based on the consent parameter, whether transmission of the data product (308, 406) requires only a first consent from the first organization (304, 402), or both the first consent and a second consent from the customer (406, 414) of the first organization;
verify, by querying the data transfer service (102, 302, 400) using the unique identifier, whether required consent(s) indicated by the consent parameter are valid; and
control transmission of the data product (308, 406) from the first connector (122) to the second connector (142) upon verifying validity of the required consent(s).

12. The system (100) of claim 11, further comprising:
a computing environment (120) of the first organization (304, 402) wherein the first connector (122) is installed;
wherein the first connector (122) comprises processing circuitry configured to operate independently of applications (130, 422) that are data sources or targets within the computing environment (120).

13. The system (100) of any of claims 11 or 12, wherein:
the first connector (122) comprises an encryption module (126) configured to:
encrypt the data product (308, 406) using a dynamic encryption key, and
encrypt the dynamic encryption key using a public key of the second organization (306, 404); and
the second connector (142) comprises a decryption module (146) configured to:
decrypt the dynamic encryption key using a private key thereof, and
decrypt the data product (308, 406) using the decrypted dynamic encryption key.

14. The system (100) of any of claims 11-13, wherein the first connector (122) and the second connector (142) comprise communication interfaces (128, 148) configured to communicate with applications (130, 150, 422, 424) of their respective organizations using GET and POST commands without application programming interfaces (APIs).

15. The system (100) of any of claims 11-14, further comprising:
a backend system (106) configured to store consent information; and
a verification module (108) configured to query the stored consent information for each transmission request to verify whether the required consent(s) are valid.
